(19) Europäisches Patentamt / European Patent Office / Office européen des brevets

(11) **EP 3 595 234 B1**

(12) **FASCICULE DE BREVET EUROPEEN**

(45) Date de publication et mention de la délivrance du brevet:
**07.06.2023 Bulletin 2023/23**

(21) Numéro de dépôt: **19185909.9**

(22) Date de dépôt: **12.07.2019**

(51) Classification Internationale des Brevets (IPC):
**H04L 9/00** (2022.01)    **H04L 9/06** (2006.01)

(52) Classification Coopérative des Brevets (CPC):
**H04L 9/003; H04L 9/004; H04L 9/0662;**
H04L 2209/34

(54) **REGISTRE À DÉCALAGE PROTÉGÉ CONTRE LES ATTAQUES PHYSIQUES**

SCHIEBEREGISTER, DAS GEGEN PHYSISCHE ANGRIFFE GESCHÜTZT IST

SHIFT REGISTER PROTECTED AGAINST PHYSICAL ATTACKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2018 FR 1856431**

(43) Date de publication de la demande:
**15.01.2020 Bulletin 2020/03**

(73) Titulaire: **Commissariat à l'énergie atomique et aux énergies alternatives
75015 Paris (FR)**

(72) Inventeurs:
• **MONTOYA, Maxime**
  **38054 GRENOBLE Cedex (FR)**
• **BACLES-MIN, Simone**
  **38054 GRENOBLE Cedex (FR)**
• **FOURNIER, Jacques**
  **38054 GRENOBLE Cedex (FR)**
• **MOLNOS, Anca**
  **38054 GRENOBLE Cedex (FR)**

(74) Mandataire: **Brevalex
56, Boulevard de l'Embouchure
B.P. 27519
31075 Toulouse Cedex 2 (FR)**

(56) Documents cités:
FR-A1- 3 004 036    US-A1- 2015 033 338

• Sandeep Kumar ET AL: "Some Thoughts about Implementation Properties of Stream Ciphers", , 28 janvier 2011 (2011-01-28), XP055587992, Extrait de l'Internet: URL:https://www.ei.ruhr-uni-bochum.de/media/crypto/veroeffentlichungen/2011/01/28/sasc_klp.pdf [extrait le 2019-05-13]
• MAGHREBI HOUSSEM ET AL: "There Is Wisdom in Harnessing the Strengths of Your Enemy: Customized Encoding to Thwart Side-Channel Attacks", 20 juillet 2016 (2016-07-20), IMAGE ANALYSIS AND RECOGNITION : 11TH INTERNATIONAL CONFERENCE, ICIAR 2014, VILAMOURA, PORTUGAL, OCTOBER 22-24, 2014, PROCEEDINGS, PART I; IN: LECTURE NOTES IN COMPUTER SCIENCE , ISSN 1611-3349 ; VOL. 8814; [LECTURE NOTES IN COMPUTER SCIENCE; LECT.NO, XP047351624, ISBN: 978-3-642-17318-9 [extrait le 2016-07-20] * sections 1 et 2 *

## Description

## DOMAINE TECHNIQUE

La présente invention concerne de manière générale le domaine de la protection de circuits intégrés contre les attaques physiques, en particulier la protection de circuits intégrés de chiffrement utilisés en cryptographie.

## ÉTAT DE LA TECHNIQUE ANTÉRIEURE

Les circuits intégrés destinés à traiter des données confidentielles et tout particulièrement les circuits intégrés de chiffrement doivent être protégés contre les techniques de cryptanalyse.

On distingue la cryptanalyse classique (ou théorique) et la cryptanalyse par attaques physiques. La cryptanalyse classique consiste à observer des données chiffrées et à essayer de remonter par une analyse différentielle ou algébrique aux données en clair. Les attaques physiques sont l'ensemble des techniques exploitant le fonctionnement du circuit de chiffrement pour remonter aux données en clair. A la différence de la cryptanalyse classique, les attaques physiques ne visent pas à attaquer l'algorithme de chiffrement en soi mais son implémentation logicielle ou matérielle.

On distingue généralement deux grandes familles d'attaques physiques matérielles, à savoir les attaques par observation (ou par canaux auxiliaires) et les attaques par injection de fautes. Les attaques par observation ou SCA (*Side Channel Analysis*) se fondent sur l'observation du circuit pendant l'exécution des calculs liés au chiffrement. Cette observation se traduit en pratique par des mesures physiques (consommation de courant, trace électromagnétique, temps de calcul, etc.). Les attaques par injection de fautes ou FIA (*Fault Injection Attack*) exploitent l'effet d'une perturbation intentionnelle sur le fonctionnement du circuit, notamment pour détourner des protections ou réduire la complexité mathématique du déchiffrement. La perturbation du fonctionnement du circuit peut être induite par exemple au moyen d'une sonde électromagnétique ou d'un laser, ou encore par modulation de la tension d'alimentation ou de la fréquence de fonctionnement du circuit.

Il est assez aisé de mener des attaques par canaux auxiliaires ou par injection de fautes sur des registres à décalage, ces attaques permettant de déterminer les données présentes dans de tels registres. Or, les registres à décalage sont utilisés dans les implémentations matérielles de nombreux algorithmes de chiffrement, notamment dans les algorithmes de chiffrement par flot (*stream cipher*) tels que Trivium ou Enocoro (normalisés dans l'ISO/IEC29192-3: 2012), mais également dans les algorithmes de hash, pour la génération de nombres aléatoires, ou encore simplement pour le stockage de données.

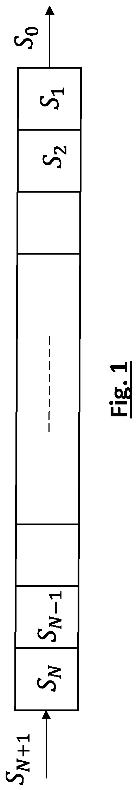

Un registre à décalage non protégé est représenté schématiquement en Fig. 1. L'état interne du registre est donné par les $N$ bits $S_1,...,S_N$ stockés dans les $N$ cellules mémoire (ou plus simplement « cellules ») du registre, chaque cellule étant généralement réalisée par une simple bascule (*flip-flop*). On considère qu'à chaque nouveau cycle d'horloge *Clk* un nouveau bit arrive en entrée du registre et que chaque bit de l'état interne est décalé d'un bit vers la sortie.

Pour mener une attaque par canaux auxiliaires, un attaquant peut exploiter le poids de Hamming et/ou la distance de Hamming. On rappelle que le poids de Hamming d'un mot binaire est défini par le nombre de bits ayant la valeur « 1 » dans ce mot, et que la distance de Hamming entre deux mots (de même taille $N$) est égal au nombre de bits où ces deux mots diffèrent. On définit par extension la distance de Hamming d'un mot $S_1,...,S_N$ comme la distance entre les mots (de taille $N$ - 1) $S_1,...,S_{N-1}$ et $S_2,...,S_N$. Autrement dit, la distance de Hamming d'un mot est égale au nombre de commutations entre deux bits successifs de ce mot. Ainsi, on comprendra qu'un registre ne contenant que des « 1 » correspondra à un poids $N$ et une distance de Hamming nulle et qu'un registre dans lequel les bits successifs alternent correspondra à un poids $N$ / 2 et une distance de Hamming de $N$ -1 ($N$ si l'on considère le bit d'entrée).

Le poids de Hamming et la distance de Hamming s'obtiennent facilement à partir de la consommation statique et la consommation dynamique du registre à décalage.

A l'heure actuelle, il n'existe pas de contre-mesure simple adaptée aux registres à décalage, ciblant de manière efficace les attaques par injection de fautes et/ou par canaux auxiliaires.

Les contre-mesures destinées à parer les attaques par injection de fautes font généralement appel à une redondance spatiale (duplication des circuits et opérations effectuées en parallèle), ou à une redondance temporelle (répétition des opérations plusieurs fois), voire encore à une redondance d'information elle-même au moyen de codes de détection d'erreur (CRC) ou de correction d'erreur (ECC). Dans tous les cas, cette redondance permet de déterminer si des erreurs ont été introduites et donc de vérifier l'intégrité des données.

Les contre-mesures destinées à parer les attaques par canaux auxiliaires sont diverses. On pourra en trouver une présentation générale dans l'article de M. Mayhew et al. intitulé « An overview of hardware-level statistical power analysis attack countermeasures » publié dans J. Cryptogr. Eng. , vol. 7, no. 3, pp 213-244, Sept. 2017. Certaines de ces contre-mesures sont fondées sur un principe de compensation de la consommation du circuit, de manière à ce que celle-ci reste constante au cours du temps.

Toutefois, la compensation de la consommation est spécifique à chaque circuit et requiert donc un effort de conception important à chaque nouveau circuit, nécessitant de faire appel à des outils et des librairies spécialisés. En outre, elle suppose que l'on compense l'ensemble des composants et des éléments parasites du circuit (capacités, résistances) afin que les différents chemins soient équilibrés en courant. Enfin, le surcoût en termes de surface, de consommation et de pertes de performances est généralement important.

Une contre-mesure destinée à parer les attaques par canaux auxiliaires contre un registre à décalage a été proposée dans l'article de S. Burman et al. intitulé « LFSR based stream cipher are vulnérable to power attacks » publié dans INDOCRYPT 2007 Proc., pp. 384-392.

Le circuit protégé est en fait un registre à décalage à rétroaction linéaire ou LFSR (*Linear Feedback Shift Register*) pouvant être utilisé dans le contexte d'un chiffrement par flot. On rappelle qu'un chiffrement par flot est réalisé en ajoutant bit à bit un flot de clé de chiffrement (*key stream*) à la séquence de bits du message en clair. Ce flot de clé est généralement généré à partir de $m$ sorties d'un registre LFSR où $m \leq N$ est le nombre de prises de rétroaction correspondant aux coefficients non nuls d'un polynôme primitif de degré $N$ (voire des sorties de plusieurs registres LFSR) lesdites sorties pouvant être combinées à l'aide d'un élément non-linéaire.

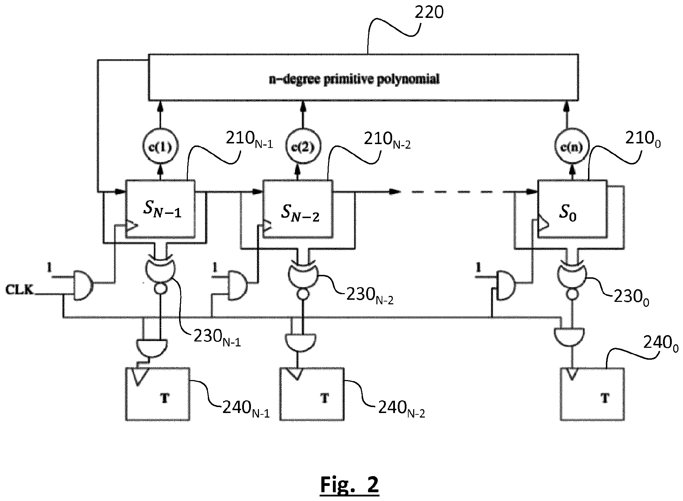

La Fig. 2 représente de manière schématique un registre LFSR protégé contre les attaques par canaux auxiliaires. Il comprend $N$ cellules (bascules) $210_0,...,210_{N-1}$, contenant les bits $S_0,...,S_{N-1}$ et une boucle de contre-réaction 220 dont les coefficients sont ceux d'un polynôme primitif.

La protection est apportée par des bascules de compensation $240_0,...,240_{N-1}$, et les portes logiques $230_0,...,230_{N-1}$. Lorsqu'une bascule $210_n$ commute, la bascule associée $240_n$ ne commute pas et inversement, ce qui garantit un nombre de commutations constant dans le circuit à chaque coup d'horloge.

On remarquera toutefois que la contre-mesure proposée n'est efficace que contre les attaques par canaux auxiliaires basées sur la distance de Hamming. Elle serait en revanche inopérante contre des attaques par canaux auxiliaires basées sur le poids de Hamming.

L'article de S. Kumar *et al.* 4intitulé « Some thoughts about implementation properties of stream ciphers" décrit un registre à décalage protégé contre les attaques physiques, utilisant une pluralité de registres élémentaires LFSR en parallèle. L'article identifie deux contributions de consommation de puissance, une fonction du poids de Hamming de chaque registre et une due aux changements du contenu des cellules pendant une transition.

L'objet de la présente invention est par conséquent de proposer une contre-mesure permettant de protéger un registre à décalage contre les différents types d'attaques par canaux auxiliaires et, dans un mode de réalisation avantageux, de protéger ce registre à la fois contre les attaques par canaux auxiliaires et par injection d'erreurs.

## EXPOSÉ DE L'INVENTION

La présente invention est définie par un registre à décalage protégé contre les attaques physiques tel que précisé dans la revendication 1. Des modes avantageux de réalisation sont indiqués dans les revendications dépendantes.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un registre à décalage non protégé contre les attaques physiques ;

La Fig. 2 représente un registre à décalage protégé contre les attaques physiques par canaux auxiliaires, connu de l'état de la technique ;

La Fig. 3 représente un registre à décalage protégé contre les attaques physiques selon un premier mode de réalisation de l'invention ;

La Fig. 4 représente un premier exemple de registre à décalage selon la Fig. 3 ;

La Fig. 5 représente un exemple de diagramme d'états pour le module de codage de la Fig. 3 ;

La Fig. 6 représente un second exemple de registre à décalage selon la Fig. 3, utilisant le diagramme d'états de la Fig. 5 ;

La Fig. 7 représente un registre à décalage contre les attaques physiques selon un second mode de réalisation de l'invention ;

La Fig. 8 représente schématiquement un circuit de chiffrement par flot utilisant un registre à décalage protégé contre les attaques physiques.

## EXPOSÉ DÉTAILLÉ DE MODES DE RÉALISATION PARTICULIERS

Nous considérerons dans la suite un registre à décalage comportant une pluralité $N \geq 2$ de cellules mémoire, à protéger contre les attaques physiques décrites plus haut. Un tel registre peut par exemple faire partie intégrante d'un circuit de chiffrement par flot à protéger comme nous le verrons plus loin.

L'idée à la base de l'invention est de prévoir une pluralité $K > 1$ de registres à décalage élémentaires en parallèle et de coder chaque bit d'entrée en un mot de $K$ bits, les bits de ce mot étant respectivement fournis aux entrées de ces registres à décalage élémentaires. Le registre à décalage à protéger peut être vu comme l'un quelconque des registres à décalage élémentaires.

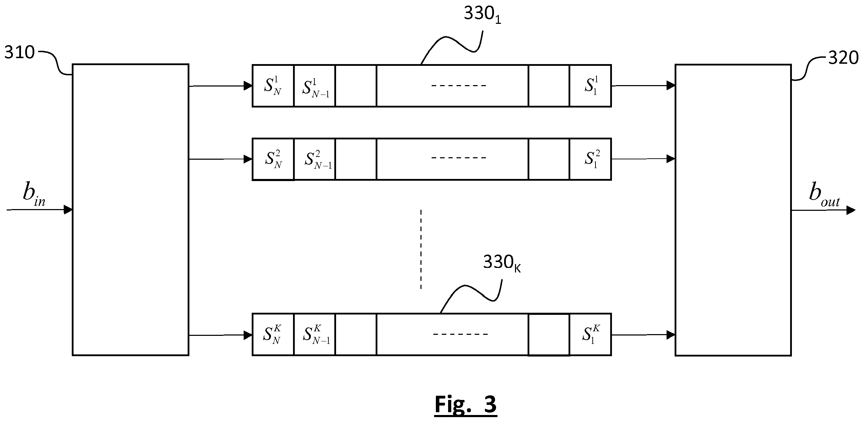

La Fig. 3 représente un registre à décalage protégé contre les attaques physiques selon un premier mode de réalisation de l'invention.

Le registre à décalage protégé contre les attaques physiques est implémenté sous la forme d'une pluralité $K$ de registres élémentaires $330_1,...,330_K$, contrôlés par une même horloge, *Clk*. A chaque coup d'horloge, un nouveau bit d'entrée est fourni au module de codage, 310, pour générer un mot de code de $K$ bits, chacune des $K$ sorties du module de codage étant reliée à l'entrée d'un registre élémentaire. Ainsi, à chaque coup d'horloge, un bit du mot de code est fourni à un registre à décalage élémentaire. Les bits en sortie des registres à décalage élémentaires, $330_1,...,330_K$, sont fournis en parallèle sous la forme d'un mot de $K$ bits qui est décodé par le module de décodage 320 pour fournir un bit de sortie.

Selon la présente invention, le codage du bit d'entrée par le module de codage peut dépendre de l'état d'une machine d'états externe, cadencée par l'horloge *Clk* et parcourant de manière cyclique une séquence d'états. Selon une variante, le codage du bit d'entrée par le module de codage dépendra à la fois d'un premier état d'une machine d'états externe et d'un second état d'une machine d'états interne.

Dans tous les cas, l'ensemble des mots du code, autrement dit le dictionnaire du code, n'est constitué que de mots présentant un même poids de Hamming, non nul. En outre, la distance de Hamming entre deux mots de code quelconques successifs est choisie constante, non nulle, autrement dit le nombre de commutations binaires à chaque coup d'horloge est identique et non nul. Ainsi, une même valeur de bit d'entrée sera codée différemment en deux instants successifs.

Dans la première variante, la machine d'états externe pourra être réalisée au moyen d'un compteur binaire synchrone, voire dans son implémentation la plus simple par une bascule DQ rebouclée sur elle-même ($Q$ sur $D$) de manière à effectuer une division de fréquence par 2. Dans ce dernier cas, le codage du bit d'entrée dépendra simplement de la parité $P$ du nombre de coups d'horloge à partir d'un instant d'initialisation.

Un premier exemple d'un tel codage d'un bit d'entrée $b$ pour $K = 4$ est donné par la table de codage ci-après :

Table I

|  | $P = 0$ | $P = 1$ |
|---|---|---|
| $b = 0$ | 0001 | 0010 |
| $b = 1$ | 0100 | 1000 |

On vérifie bien que tous les mots du code ont le même poids de Hamming (en l'occurrence 1) et que deux mots de code successifs présentent une même distance de Hamming (égale à 2).

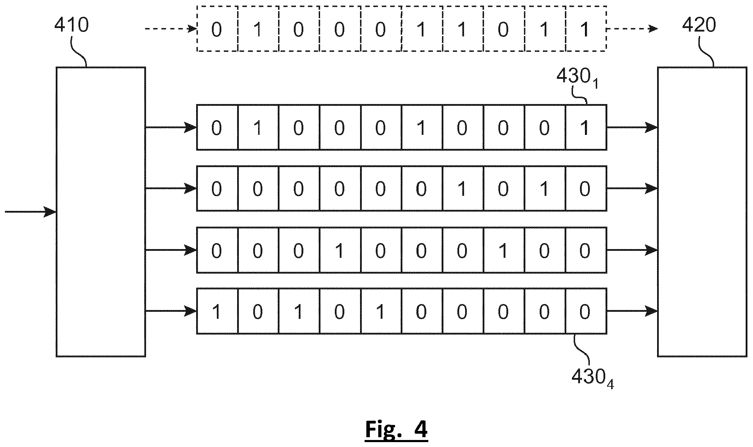

La Fig. 4 représente un exemple de registre à décalage protégé dans lequel le module de codage utilise la table de codage ci-dessus. On a représenté en haut de la figure, en pointillés, le registre à décalage non-protégé équivalent. Dans cette figure, le premier coup d'horloge, correspondant à $S_1^1,...,S_1^K$ est supposé avoir une parité impaire ($P = 1$).

Le module de décodage décode à chaque coup d'horloge le mot constitué par les $K$ bits en sortie des registres à décalage élémentaires, en utilisant le dictionnaire du code. Si le mot en question ne fait pas partie du dictionnaire du code, une erreur est détectée et signalée. Ainsi, dans le cas de l'exemple du registre protégé représenté en Fig. 4, si le mot à décoder possède deux bits ou plus égaux à « 1 », ou bien aucun bit égal à 1, une erreur sera détectée et signalée.

Un attaquant souhaitant injecter une faute dans le circuit sans que celle-ci ne soit détectée devra injecter simultanément une faute à la même position et dans deux registres élémentaires différents. Il devra en outre injecter cette faute sur exactement un bit par registre élémentaire, faute de quoi un état inconnu sera généré. Enfin, l'attaquant devra avoir accès à la parité $P$ afin de réaliser cette insertion. La combinaison de ces trois conditions est très difficile à réaliser. En particulier, elle est beaucoup plus difficile à réaliser qu'une attaque menée contre une contre-mesure connue de l'état de la technique, à base de simple redondance spatiale.

Le module de codage peut fonctionner lui-même comme une machine d'états, autrement dit chaque coup d'horloge fait passer la machine à un nouvel état, fonction de l'état précédent et de la valeur binaire du bit d'entrée (une telle machine d'états sera dite « interne »). La description des transitions entre états, en fonction des bits d'entrée est donnée par un diagramme d'états. A chaque état correspond un mot de code de $K$ bits, ces $K$ bits étant fournis aux $K$ entrées respectives des registres à décalage élémentaires.

Les mots de code associés aux différents états sont choisis de manière à avoir tous un même poids de Hamming non nul et tels que chaque couple de mots de code successifs présente une même distance de Hamming non nulle.

Le module de décodage est basé sur le même diagramme d'états que le module de codage : à partir de deux états successifs, ce module détermine la valeur binaire qui correspond à la transition de l'un à l'autre, et fournit cette valeur comme bit de sortie.

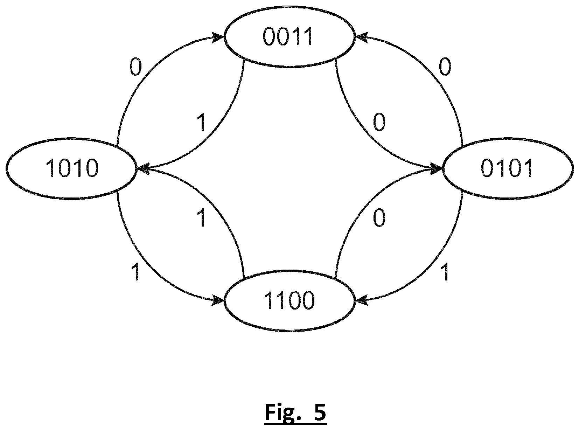

La Fig. 5 représente un exemple de diagramme d'états pour le module de codage de la Fig. 3. Les valeurs binaires associées aux arêtes du graphe correspondent aux valeurs possibles du bit d'entrée du module de codage.

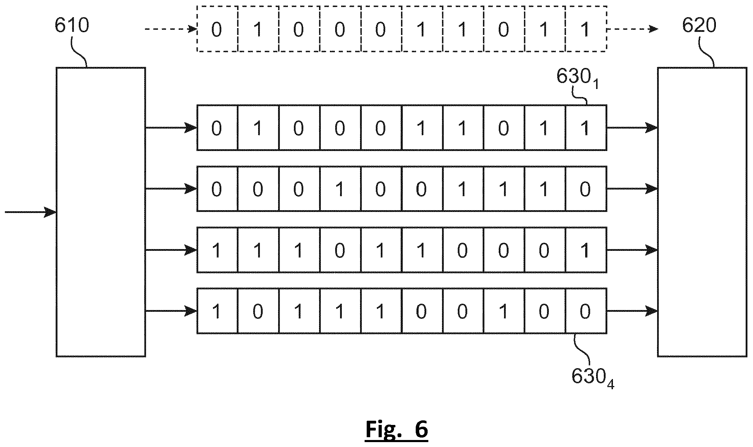

La Fig. 6 représente un second exemple de registre à décalage selon la Fig. 3, utilisant le diagramme d'états de la Fig. 5.

On a représenté en haut de la figure, en pointillés, le registre à décalage non-protégé équivalent. Le module de codage est représenté en 610 et celui de décodage en 620. Les registres à décalage élémentaires sont représentés en $630_1,...,630_4$.

On a supposé ici que l'état initial de la machine d'états était 1010. Cet état est fourni en tant que premier mot de code $S_1^1, ..., S_1^K$ aux $K$ registres à décalage élémentaires. L'arrivée du premier bit de valeur « 1 » fait passer le codeur de l'état 1010 à l'état 1100. Ce mot de code, $S_2^1, ..., S_2^K$, est fourni aux registres à décalage élémentaires. Le second bit de valeur « 1 » fait passer le codeur de l'état 1100 à l'état 1010. Ce mot de code $S_3^1, ..., S_3^K$ est fourni aux registres à décalage élémentaires et ainsi de suite.

Dans cet exemple, le poids de Hamming des différents mots du code est égal à 2 et la distance de Hamming entre deux mots successifs du code est égale à 2.

De la même façon que précédemment, si un mot de sortie $S_n^1, ..., S_n^K$ n'appartient pas au dictionnaire du code, le module de décodage 620 détectera une erreur et pourra la signaler.

Selon une variante, le codage du bit d'entrée pourra être réalisé en fonction de l'état d'une première machine d'états externe, telle qu'un compteur, et de l'état d'une seconde machine d'états interne. Les transitions entre les états internes peuvent alors dépendre à la fois de l'état externe (par exemple de la partie $P$ du compteur de coups d'horloge) et du bit en entrée du module de codage. Cela se traduit par une double indexation du diagramme d'états de la seconde machine d'états.

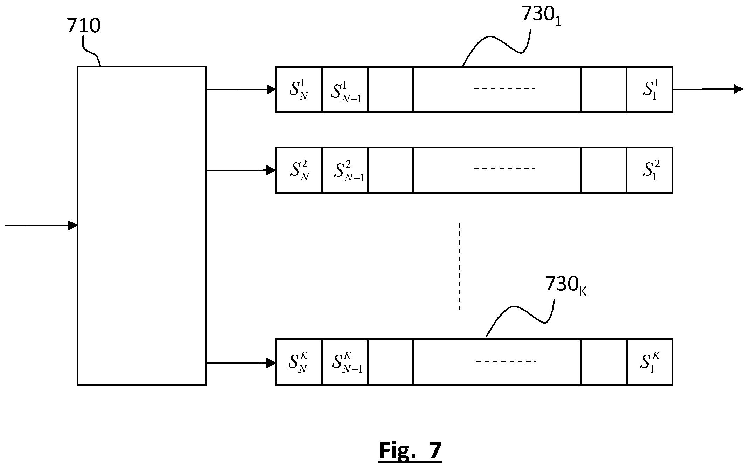

La Fig. 7 représente un registre à décalage protégé contre les attaques physiques selon un second mode de réalisation de l'invention.

Comme dans le premier mode de réalisation, le module de codage 710 peut être implémenté selon la variante exposée précédemment.

Il diffère toutefois du précédent en ce que le module de codage 710 utilise un code systématique. Autrement dit, le mot de code $S_n^1, ..., S_n^K$ codant le bit $b_n$ contient ce bit : $\exists k$ tel que $S_n^k = b_n$, $\forall n$. Il en diffère également en ce que le module de décodage est ici absent, la sortie systématique, c'est-à-dire celle du registre à décalage élémentaire $730_k$ étant directement utilisée.

Ainsi, par exemple, on peut remarquer que le registre à décalage représenté en Fig. 6 est susceptible d'être implémenté selon le second mode de réalisation de l'invention, la séquence de bits en sortie du registre $630_1$ étant identique à la séquence des bits d'entrée.

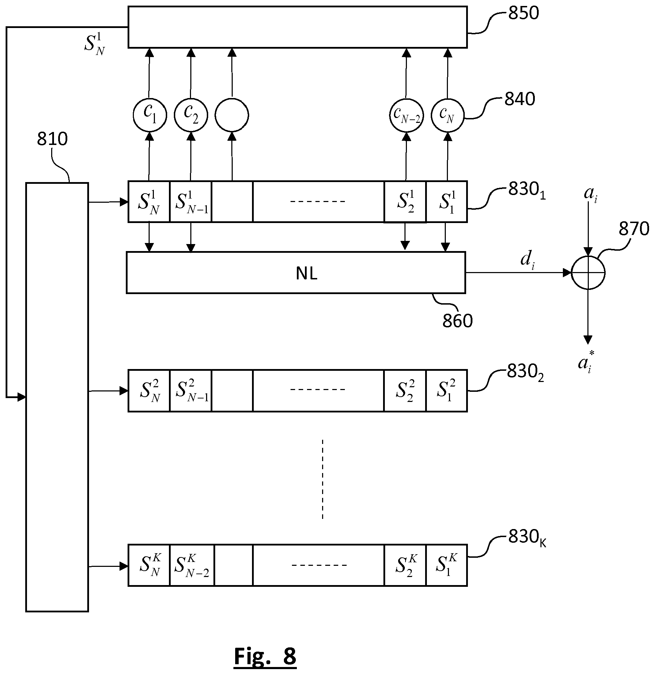

La Fig. 8 représente schématiquement un circuit de chiffrement par flot utilisant un registre à décalage protégé contre les attaques physiques.

Il convient de noter qu'un registre à décalage selon le premier mode de réalisation de l'invention pourrait alternativement être utilisé, au prix d'une complexité plus grande (ajout du module de décodage) mais avec l'avantage de la détection d'erreur associée.

En Fig. 8, le module de codage 810 utilise un code systématique comme le module 710 de la Fig. 7. Seul le registre à décalage élémentaire, ici $830_1$, correspondant à la sortie systématique est utilisé pour générer le flot de clé de chiffrement. Les contenus des cellules mémoire du registre à décalage élémentaire en question sont respectivement multipliés en 840 par les coefficients binaires $c_1, c_2, ..., c_N$ d'un polynôme primitif et sommés dans l'additionneur binaire (XOR) 850 pour fournir le bit à l'entrée du module de codage :

$$b_n = \sum_{i=1}^{N} c_{N-i+1} S_i^1 = \sum_{i=1}^{N} c_{N-i+1} b_i$$

Par ailleurs, les bits du registre élémentaire $830_1$, voire certains d'entre eux seulement, peuvent être combinés au moyen d'un module de combinaison 860 (par exemple porte logique) implémentant une fonction non linéaire NL pour fournir un flot de clé de chiffrement $d_1, ... d_M$.

La séquence de bits à chiffrer $a_1, ..., a_M$ formant le message en clair et le flot de clé de chiffrement sont sommés par l'additionneur logique 870 pour fournir le message chiffré $a_1^*, ..., a_M^*$, avec $a_i^* = a_i + d_i$.

En pratique, on pourra utiliser une pluralité de registres à décalage protégés contre les attaques physiques tels que celui représenté en Fig. 8 et l'on combinera certains bits de chacun des registres élémentaires correspondant à leur sorties systématiques respectives pour obtenir le flot de clé de chiffrement. Par exemple, chacun de ces registres élémentaires sera associé à un module de combinaison non linéaire et les séquences en sortie de ces modules de combinaison non linéaires seront sommées entre elles. Alternativement, le module de combinaison non linéaire pourra être mutualisé entre ces registres élémentaires et recevoir certains bits de chacun d'eux pour former le flot de clé de chiffrement.

**Revendications**

1. Registre à décalage protégé contre les attaques physiques, **caractérisé en ce qu'**il comprend un module de codage recevant des bits d'entrée et codant, à chaque coup d'horloge, un bit d'entrée ($b_{in}$) en un mot de code de taille $K > 1$, une pluralité $K$ de registres à décalage élémentaires ($330_1, ..., 330_K$) comportant chacun un même nombre $N > 2$ de cellules mémoire, chaque registre à décalage élémentaire recevant en entrée un bit ($S_n^k$) du mot de code et fournissant un bit d'un mot à décoder de taille $K$ pour générer un bit de sortie ($b_{out}$), les mots de code étant choisis de manière à posséder tous un même poids de Hamming non nul et chaque couple de mots de code consécutifs présentant une même distance de Hamming non nulle, ledit registre à décalage comprenant en outre une machine d'états externe, cadencée par ladite horloge et parcourant de manière cyclique une séquence d'états, le mot de code généré par le module de codage étant fonction du bit d'entrée et de l'état courant de ladite machine d'états externe, ladite machine d'états externe étant réalisée sous la forme d'un compteur binaire synchrone, fournissant une parité de nombre de coups d'horloge à partir d'un instant d'initialisation, le mot de code généré par le module de codage étant fonction du bit d'entrée et de ladite parité.

2. Registre à décalage selon la revendication 1, **caractérisé en ce que** le codage mis en oeuvre par le module de codage est un codage systématique, le bit de sortie étant le bit systématique du mot à décoder et étant fourni par l'un des registres élémentaires.

3. Registre à décalage selon la revendication 1 ou 2, **caractérisé en ce qu'**il comprend en outre un module de décodage (320) dont les entrées sont reliées aux sorties respectives des $K$ registres à décalage élémentaires, et décodant le mot à décoder pour fournir le bit de sortie.

4. Registre à décalage selon l'une des revendications précédentes, **caractérisé en ce que** le module de codage comprend une machine d'états interne, chaque état étant associé à un mot de code, la machine d'états passant à chaque coup d'horloge d'un état courant à un état suivant en fonction de l'état courant et du bit d'entrée, le mot de code généré par le module de codage étant celui associé à l'état suivant.

**Patentansprüche**

1. Gegen physikalische Angriffe geschütztes Schieberegister, **dadurch gekennzeichnet, dass** es ein Kodierungsmodul aufweist, das Eingabebits empfängt und bei jedem Taktimpuls ein Eingabebit ($b_{in}$) in ein Codewort der Größe $K > 1$ kodiert, wobei mehrere $K$ elementare Schieberegister ($330_1,...,330_K$) jeweils die gleiche Anzahl $N > 2$ von Speicherzellen aufweisen, wobei jedes Elementarschieberegister als Eingang ein Bit ($S_n^k$) des Codeworts empfängt und ein Bit eines zu dekodierenden Wortes der Größe $K$ liefert, um ein Ausgangsbit ($b_{out}$) zu erzeugen, wobei die Codewörter derart ausgewählt werden, dass sie alle dasselbe von Null verschiedene Hamming-Gewicht aufweisen und jedes Paar aufeinanderfolgenden der Codewörter denselben von Null verschiedenen Hamming-Abstand aufweist, wobei das Schieberegister ferner eine externe Zustandsmaschine aufweist, die von dem Taktgeber getaktet wird und zyklisch eine Folge von Zuständen durchläuft, wobei das von dem Kodierungsmodul erzeugte Codewort eine Funktion des Eingangsbits und des momentanen Zustands der externen Zustandsmaschine ist, wobei die externe Zustandsmaschine in Form eines synchronen Binärzählers ausgebildet ist, der ab einem Initialisierungszeitpunkt eine Parität der Anzahl von Taktimpulsen liefert, wobei das von dem Kodierungsmodul erzeugte Codewort eine Funktion des Eingangsbits und der Parität ist.

2. Schieberegister nach Anspruch 1, **dadurch gekennzeichnet, dass** die vom Kodierungsmodul implementierte Kodierung eine systematische Kodierung ist, wobei das Ausgangsbit das systematische Bit des zu dekodierenden Wortes ist und von einem der Elementarregister geliefert wird.

3. Schieberegister nach Anspruch 1 oder 2, **dadurch gekennzeichnet, dass** es zusätzlich ein Decodiermodul (320) aufweist, dessen Eingänge mit den jeweiligen Ausgängen der elementaren Schieberegister verbunden sind, und das das zu decodierende Wort decodiert, um das Ausgangsbit bereitzustellen.

4. Schieberegister nach einem der vorhergehenden Ansprüche, **dadurch gekennzeichnet, dass** das Kodierungsmodul eine interne Zustandsmaschine aufweist, wobei jeder Zustand einem Codewort zugeordnet ist, wobei die Zustandsmaschine bei jedem Taktimpuls in Abhängigkeit vom momentanen Zustand und dem Eingangsbit von einem momentanen Zustand in einen nachfolgenden Zustand übergeht, wobei das vom Kodierungsmodul erzeugte Codewort dem nachfolgenden Zustand zugeordnete ist.

**Claims**

1. Shift register protected against physical attacks, **characterized in that** it comprises a coding module receiving input bits and encoding, at each clock cycle, an input bit ($b_{in}$) into a codeword of size $K > 1$, a plurality $K$ of basic shift registers ($330_1,...,330_K$) each comprising the same number $N > 2$ of memory cells, each basic shift register receiving as input one bit ($S_n^k$) of the codeword and supplying one bit of a word to be decoded of size $K$ in order to generate one output bit ($b_{out}$), the codewords being chosen in such a way as to all have the same non-zero Hamming weight and each pair of consecutive codewords having the same non-zero Hamming distance, said shift register further comprising an external state machine, clocked by said clock and cyclically running through a sequence of states, the codeword generated by the coding module being a function of the input bit and of the current bit of said external state machine, said external state machine being produced in the form of a synchronous binary counter suppling a parity in the number of clock cycles using an initialization instant, the codeword generated by the coding module being a function of the input bit and of said parity.

2. Shift register according to claim 1, **characterized in that** the coding implemented by the coding module is a systematic coding, with the output bit being the systematic bit of the word to be decoded and being supplied by one of the basic registers.

3. Shift register according to claim 1 or 2, **characterized in that** it further comprises a decoding module (320) of which the inputs are connected to the respective outputs of the K basic shift registers, and decoding the word to be decoded in order to supply the output bit.

4. Shift register according to one of the preceding claims, **characterized in that** the coding module comprises an internal state machine, with each state being associated with a codeword, the state machine passing at each clock cycle from a current state to a following state according to the current state and the input bit, the codeword generated by the coding module being the one associated with the following state.

**Fig. 1**

**Fig. 2**

**Fig. 3**

**Fig. 4**

**Fig. 5**

EP 3 595 234 B1

**Fig. 6**

EP 3 595 234 B1

710

$730_1$

| $S_N^1$ | $S_{N-1}^1$ | | -------- | | $S_1^1$ |

| $S_N^2$ | $S_{N-1}^2$ | | -------- | | $S_1^2$ |

$730_K$

| $S_N^K$ | $S_{N-1}^K$ | | -------- | | $S_1^K$ |

**Fig. 7**

**Fig. 8**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. MAYHEW et al.** An overview of hardware-level statistical power analysis attack countermeasures. *J. Cryptogr. Eng.,* Septembre 2017, vol. 7 (3), 213-244

- **S. BURMAN et al.** LFSR based stream cipher are vulnérable to power attacks. *INDOCRYPT 2007 Proc.,* 384-392